**Europäisches Patentamt**

**European Patent Office**

**Office européen des brevets**

(19)

(11) Veröffentlichungsnummer: **0 154 032**
**B1**

(12) # EUROPÄISCHE PATENTSCHRIFT

(45) Veröffentlichungstag der Patentschrift:
**03.06.87**

(51) Int. Cl.⁴: **B 65 G 27/08**

(21) Anmeldenummer: **84116225.8**

(22) Anmeldetag: **22.12.84**

(54) **Schwingförderer mit einer gestreckten Förderrinne.**

(30) Priorität: **27.01.84 DE 3402761**

(43) Veröffentlichungstag der Anmeldung:
**11.09.85 Patentblatt 85/37**

(45) Bekanntmachung des Hinweises auf die Patenterteilung:
**03.06.87 Patentblatt 87/23**

(84) Benannte Vertragsstaaten:
**AT CH DE FR GB IT LI**

(56) Entgegenhaltungen:
**DE - A - 2 918 935**
**DE - A - 2 926 209**
**GB - A - 786 445**
**GB - A - 2 080 481**
**US - A - 2 333 338**
**US - A - 3 045 810**
**US - A - 3 729 090**

(73) Patentinhaber: **ROBERT BOSCH GMBH, Postfach 50,**
**D-7000 Stuttgart 1 (DE)**

(72) Erfinder: **Hütter, Odo, Dr.-Ing., Hugo Wolf Weg 17,**
**D-7312 Kirchheim/Teck (DE)**
Erfinder: **Jung, Rainer, Weidenweg 10, D-7250 Leonberg**
**(DE)**

## Beschreibung

Die Erfindung geht aus von einem Schwingförderer nach der Gattung des Hauptanspruchs. Bei bekannten Schwingförderern dieser Gattung (DE-OS 2 918 935) dienen die gegen den Basiskörper gerichteten Seitenwangen der Förderrinne zur Befestigung der Blattfedern und des Ankers des Magnetantriebs. Die Seitenwangen sind zu diesem Zweck nur verhältnismässig schmal ausgeführt, so dass sie zur Versteifung der Förderrinne nicht wesentlich beitragen. Die magnetische Anzugskraft wird über Schrauben auf die Förderrinne übertragen, welche durch Langlöcher in den Seitenwangen hindurchtreten und daher nur reibungsschlüssig mit den Seitenwangen verspannt sind. Das hat den Nachteil, dass sich die Befestigung des Ankers an der Förderrinne durch die hohe Schwingbeanspruchung mit der Zeit lockern kann, was einen erhöhten Wartungsaufwand bedingt.

Die erfindungsgemässe Anordnung mit den kennzeichnenden Merkmalen des Hauptanspruchs hat demgegenüber den Vorteil, dass die Seitenwangen die Förderrinne erheblich versteifen, die Blattfedern und den Magnetantrieb nach aussen abschirmen und den Masseschwerpunkt der Förderrinne nach unten gegen den Masseschwerpunkt des Basiskörpers verlagern, wodurch das vom Förderer auf das Fundament übertragene Drehmoment verkleinert wird. Die Magnetkraft wird formschlüssig auf die Förderrinne übertragen, wodurch der eingestellte magnetische Luftspalt durch Schwingungsbeanspruchung nicht verstellt werden kann.

Durch die in den Unteransprüchen aufgeführten Massnahmen sind vorteilhafte Weiterbildungen des Gegenstandes des Hauptanspruchs möglich.

Eine besonders biegesteife und dennoch leichte Ausführung der Förderrinne ergibt sich, wenn diese gemäss Anspruch 2 aus einem gezogenen Profil, vorzugsweise einer Al-Legierung, hergestellt ist. Infolge des relativ geringen Gewichts der Förderrinne ergibt sich ein günstiges Verhältnis von Nutzmasse zur Antriebsenergie.

Die Merkmale des Anspruchs 3 ergeben einen übersichtlichen, aus fertigungsgerechten Einzelteilen bestehenden Aufbau des Basiskörpers, welcher auch eine einfache Montage und Demontage der Einzelteile gestattet. Die Tragschiene des Basiskörpers kann gemäss Anspruch 4 vorteilhaft ebenfalls aus einem gezogenen Profil bestehen.

Eine optimale Ausnutzung des zwischen den Blattfedern liegenden und von den Seitenwangen der Förderrinne umschlossenen Raumes im Inneren des Förderers ergibt sich, wenn die Massekörper gemäss Anspruch 5 ausgebildet sind. Der Förderer kann besonders schmal ausgeführt werden, wenn der Magnetantrieb gemäss Anspruch 6 ausgebildet und angeordnet ist.

Eine vorteilhafte Ausführung ergibt sich, wenn der Anker des Magnetantriebs gemäss Anspruch 7 an einer Deckelplatte befestigt ist, welche am Boden und an den Seitenwangen der Förderrinne stirnseitig anliegt. Bei dieser Anordnung wird die Magnetkraft über eine verhältnismässig grosse Fläche auf die Förderrinne übertragen, so dass die Deckelplatte dünnwandig ausgebildet sein kann, und ausserdem sind die Mittel zum Verstellen des magnetischen Luftspalts bequem von der Stirnseite des Förderers her zugänglich.

Eine dem Bestreben nach Verwendung einer möglichst dünnwandigen Deckelplatte entgegenkommende Ausführung ergibt sich durch die Merkmale des Anspruchs 8, die eine Gewindebohrung in der Deckelplatte entbehrlich machen. Die Widerlager, welche beispielsweise durch metallische Schraubenfedern, Tellerfedern, oder elastisch zusammenpressbare Gummi- bzw. Kunststoffbuchsen gebildet sein können, erzeugen eine Gegenkraft bei entsprechender Vorspannung durch Anziehen des zentral angeordneten Schraubteils, beispielsweise einer Kopfschraube, die in eine Gewindebohrung des Ankers oder eines Fassungsteils für den Anker eingeschraubt ist und deren Kopf sich an der Deckelplatte aussen abstützt. Die Gegenkraft verhindert die freie Bewegung des Ankers gegenüber der Deckelplatte und stellt im Zusammenwirken beispielsweise mit dem an der Deckelplatte aufliegenden Schraubenkopf sicher, dass der eingestellte Luftspalt im Betrieb des Förderers erhalten bleibt.

Eine besonders einfache und kostengünstige Ausführung ergibt sich bei Verwendung eines Gewindestiftes gemäss Anspruch 9, welcher als genormtes Handelsteil erhältlich ist.

Bei Schwingförderern, deren Magnetantrieb einen U-förmigen Kern hat, ist es vorteilhaft, wenn die Widerlager gemäss Anspruch 10 den Anker in der vorgeschriebenen Lage gegenüber dem Spulenkörper halten.

Ein Schwingförderer gemäss Anspruch 11 ist montagefreundlich und ermöglicht einen modularen Aufbau, bei welchem mit einer verhältnismässig geringen Anzahl von Standardbauteilen Förderer mit unterschiedlichen Längen zusammengesetzt werden können. Die Merkmale des Anspruchs 11 sind mit Vorteil auch bei solchen Schwingförderern anwendbar, welche die kennzeichnenden Merkmale des Hauptanspruchs nicht aufweisen.

Besonders vorteilhaft ist die Ausführung nach Anspruch 12, bei welcher verschiedene Teile einfach in Steckbauweise zusammengefügt sind. Durch Festziehen der Zuganker und Anschrauben der Massekörper an der Tragschiene werden die Blattfedern in der vorschriftsmässigen Lage am Basiskörper festgelegt. Dieser Aufbau ist besonders vorteilhaft bei längeren Förderern, die eine Vielzahl von Blattfedern haben. Durch die Ausbildung gemäss den Ansprüchen 13 bis 15 kann der Zusammenbau des Basiskörpers weiter erleichtert werden.

Der Zusammenbau der Förderrinne mit den vom Basiskörper abstehenden Enden der Blattfedern wird erleichtert, wenn auch dafür eine Steckverbindung gemäss den Ansprüchen 16 und 17 vorgesehen ist. Bei Ausbildung der Klemmstücke nach Anspruch 18 bzw. 19 wird mit dem Anziehen der Zuganker und axialem Zusammenspannen der Teile gleichzeitig eine Klemmverbindung zwischen den Blattfedern und der Förderrinne erzielt, welche allen auftretenden Betriebskräften standhält.

Eine Vorjustierung des magnetischen Luftspalts kann durch die Merkmale des Anspruchs 20 erreicht werden.

Ein Ausführungsbeispiel der Erfindung ist in der Zeichnung dargestellt und in der nachfolgenden Beschreibung näher erläutert. Es zeigen:

Fig. 1 in schematischer Darstellung eine Seitenansicht des Ausführungsbeispiels,

Fig. 2 einen Schnitt nach Linie II-II in Fig. 1,

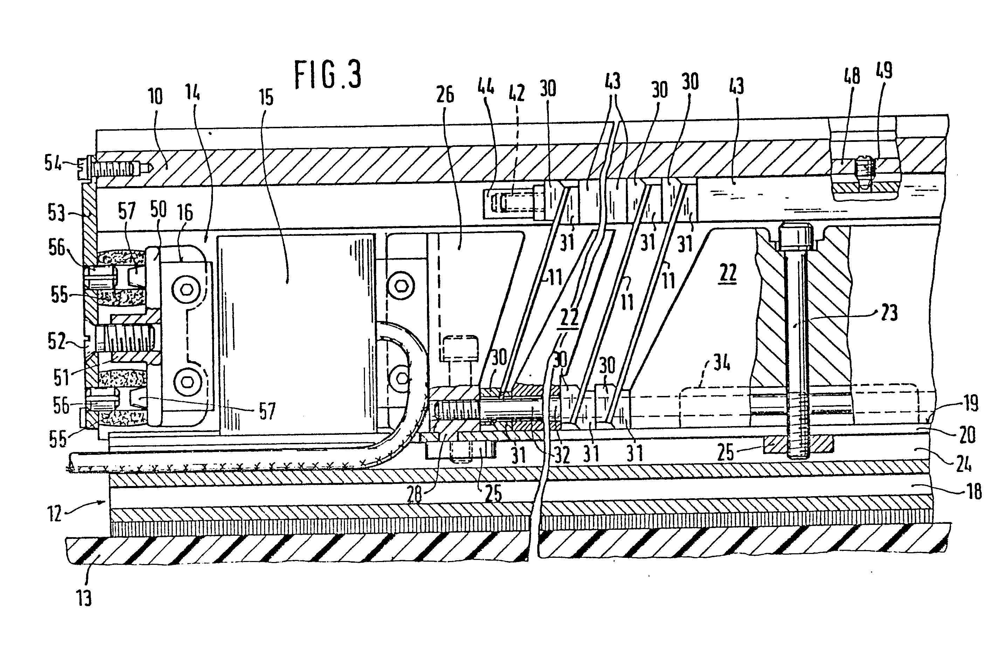

Fig. 3 zwei Teil-Längsschnitte durch das Ausführungsbeispiel und

Fig. 4 einen Teil-Längsschnitt durch eine Abwandlung des Ausführungsbeispiels.

Der Schwingförderer hat eine gestreckte Förderrinne 10, die über schräg stehende Blattfedern 11 mit einem als Gegenmasse wirkenden Basiskörper 12 verbunden ist. Die Förderrinne 10 ist aus einem gezogenen Profil einer Al-Legierung gebildet und wird von den Blattfedern 11 freitragend gehalten und geführt. Der Basiskörper 12 ist mit einem Fundament 13 schwingungsisoliert verbunden bzw. gekoppelt. Zum Bewegen der Förderrinne 10 in Richtung des Doppelpfeiles A dient ein Magnetantrieb 14, dessen einen Kern enthaltender Spulenkörper 15 mit dem Basiskörper 12 und dessen Anker 16 mit der Förderrinne 10 in der nachstehend noch näher beschriebenen Weise verbunden sind.

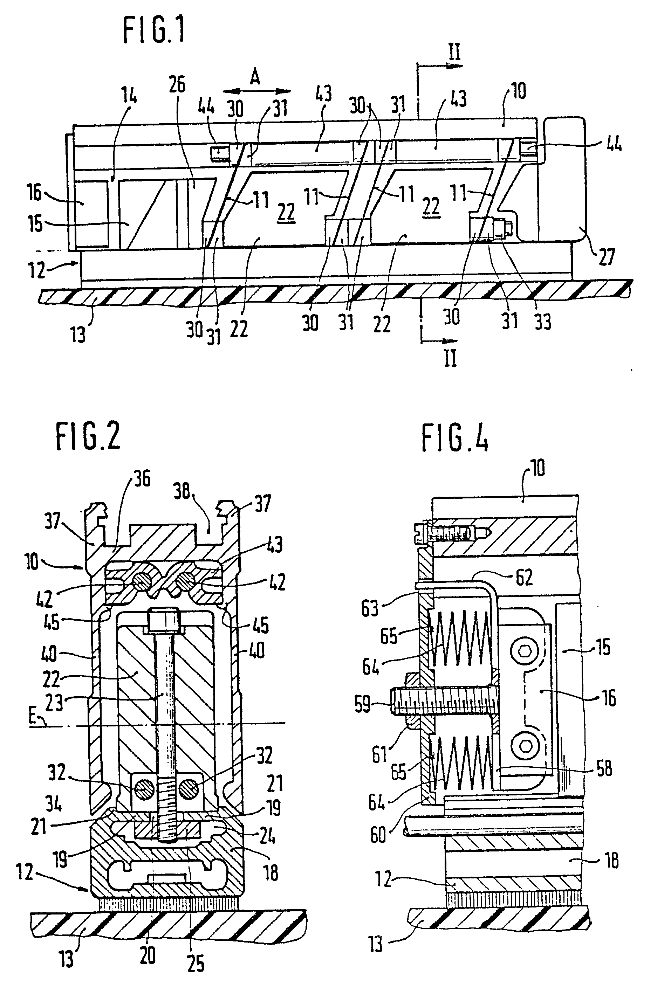

Der Basiskörper 12 hat als tragendes Grundbauelement eine Tragschiene 18 (Fig. 2), die ebenfalls durch ein gezogenes Profil gebildet ist. Die Tragschiene 18 hat oben zwei gegeneinander gerichtete Kopfleisten 19, die zwischen sich einen Längsschlitz 20 begrenzen, der sich über die gesamte Länge der Tragschiene 18 erstreckt. Auf die Kopfleisten 19 sind, geführt durch Schultern 21, zwischen den Blattfedern 11 zwei gleichgestaltete Massekörper 22 aufgesetzt, die durch senkrecht angeordnete Schrauben 23 an der Tragschiene 18 befestigt sind. Die Schrauben 23 treten durch den Längsschlitz 20 hindurch und tragen in einem unter den Kopfleisten 19 gebildeten Hohlraum 24 je eine Spannmutter 25, welche gegen die untere Seite der Kopfleisten 19 gespannt ist.

Zur Bidlung der Gegenmasse des Basiskörpers 12 sind ferner zwei weitere Massekörper 26 und 27 ausserhalb des Blattfedersatzes 11 angeordnet. Am Massekörper 26 sind die Spulenkörper 15 befestigt und — in einer senkrecht auf der Zeichnungsebene stehenden Ebene — zwei Zentrieraugen 28 vorgesehen, welche passend in Zentrierbohrungen in den Kopfleisten 19 eingreifen. Die den Blattfedern 11 zugekehrten Stirnflächen der Massekörper 22, 26 und 27 haben annähernd die gleiche Schräglage wie die Blattfedern 11, so dass der Raum zwischen diesen optimal für die Gegenmassebildung ausgenutzt ist. Die Massekörper 26 und 27 sind auf die gleiche Weise wie die Massekörper 22 an der Tragschiene 18 des Basiskörpers 12 befestigt.

Jeder Endabschnitt einer Blattfeder 11 ist zwischen zwei Klemmstücken 30 und 31 eingespannt, die gleichgestaltet, jedoch paarweise um 180° versetzt zueinander angeordnet sind. Die Klemmstücke 30, 31 haben je eine zylindrische Mantelfläche und zwei Seitenflächen, von denen die eine senkrecht zur Zylinderachse und die andere, an der Blattfeder 11 anliegende Seitenfläche in einem der Schräglage der Blattfeder 11 entsprechenden Winkel zur Zylinderachse angeordnet sind. Jeder Massekörper 22 ist angrenzend an seine der Tragschiene 18 zugekehrte Auflagefläche mit senkrecht dazu angeordneten Spannflächen versehen, deren gegenseitiger Abstand so gross gewählt ist, dass die dem Massekörper 22 benachbarten Klemmstücke 31, 30 ohne Zwischenschaltung weiterer Distanzstücke unmittelbar an den Spannflächen der Massekörper 22 anliegen. Der Massekörper 26 ist ebenfalls mit einer derartigen Spannfläche versehen, an welcher das eine Klemmstück 30 der benachbarten Blattfeder 11 anliegt.

In den Massekörper 26 sind ferner zwei Zuganker 32 eingeschraubt, die sich im Abstand parallel zueinander in Förderrichtung erstrecken und die Klemmstücke 30, 31, die Blattfedern 11 und die Massekörper 22 in Bohrungen durchsetzen. Am anderen Ende ist auf jeden Zuganker 22 eine Spannmutter 33 aufgeschraubt, über welche die beschriebenen Teile zusammengespannt sind. Die Spannmuttern 33 sind durch geeignete Mittel gegen ungewolltes Lösen gesichert. Zum einwandfreien Aufliegen auf der Tragschiene 18 sind die Massekörper 22 unten je mit einer Ausnehmung 34 versehen.

Die Förderrinne 10 hat einen Boden 36 und zwei Seitenwände 37, zwischen denen ein das Fördergut aufnehmender und führender Raum 38 gebildet ist. Auf die Förderrinne kann eine geeignete, auf z.B. ein Werkstück abgestimmte Aufsatzrinne montiert werden. Im Raum 38 kann gegebenenfalls noch eine Einlage vorgesehen sein, welche speziell auf die Beschaffenheit des Fördergutes abgestimmt ist. An den Boden 36 sind ferner zwei nach unten gerichtete Seitenwangen 40 einstückig angeformt, welche die Blattfedern 11, die Massekörper 22, 26 und den Magnetantrieb 14 übergreifen. Die Seitenwangen 40 reichen über die durch den Masseschwerpunkt des Basiskörpers 12 gehende waagrechte Ebene E hinweg und bis etwa auf die Höhe der Kopfleisten 19 der Tragschiene 18 herunter, wodurch der Masseschwerpunkt der Förderrinne 10 nach unten gegen den Masseschwerpunkt des Basiskörpers 12 verlagert ist.

Zum Verbinden der Blattfedern 11 mit der Förderrinne 10 sind zwei Zuganker 42 vorgesehen, welche die oberen Endabschnitte der Blattfedern 11 mit Klemmstücken 30, 31 und Distanzstücken 42 axial verspannen und dabei die Förderrinne 10 festklemmen. Zu diesem Zweck sind die Zuganker 42 an beiden Enden mit Gewindeabschnitten versehen, auf welche Spannelemente in Form von Hutmuttern 44 aufgeschraubt sind. Die Distanzstücke 42 sind in der Förderrinne 10 zwischen den Seitenwangen 40, dem Boden 36 und zwei an die Seitenwangen 40 innen angeformten Leisten 45 verschiebbar geführt. Die Zuganker 42 haben einen Durchmesser, der kleiner als der Durchmesser der Bohrungen in den Klemmstücken 30, 31 ist.

Beim Anziehen der Hutmuttern 44 werden die Klemmstücke 30 infolge der schrägen Auflage an den Blattfedern 11 nach oben gedrückt und an den Boden 36 der Förderrinne 10 angepresst. Die dadurch hervorgerufene Reaktionskraft presst andererseits die Distanzstücke 43 an die Leisten 45 an, wodurch sich insgesamt die erwünschte Klemmwirkung ergibt. Zur Lagebestimmung der Förderrinne 10 gegenüber den Blattfedern 11 und dem Basiskörper 12 ist in einem geschwächten Bodenabschnitt 48 der Förderrinne 10 eine Gewindebohrung mit einer Zentrierschraube 49 vorgesehen, welche passend in einer Zentrierbohrung in einem der Distanzstücke 43 eingreift. Die Hutmuttern 44 sind durch geeignete Mittel gegen ungewolltes Lösen gesichert.

Der Magnetantrieb 14 hat einen U-förmigen Kern und demzufolge einen rechteckigen Spulenkörper 15, der hochgestellt zwischen den Seitenwangen 40 der Förderrinne 10 angeordnet ist. Der balkenförmige Anker 16 ist an einem Halteteil 50 befestigt, welches mit einer zentralen Gewindenabe 51 versehen ist. In diese ist eine Kopfschraube 52 eingedreht, deren Kopf sich an einer relativ dünnwandigen Deckelplatte 53 abstützt, welche am Boden 36 und den Seitenwangen 40 der Förderrinne stirnseitig anliegt. Die Deckelplatte 53 ist mit Schrauben 54 an die Förderrinne 10 angeschraubt, welche von den Anzugskräften des Magnetantriebes 14 entlastet sind.

Die Kopfschraube 52 spannt das Halteteil 50 des Ankers 16 gegen zwei Gummifedern 55, die je durch einen in die Deckelplatte 53 eingepressten Kerbstift 56 symmetrisch zur Magnetachse gehalten sind. Der Halteteil 50 ist mit in die Gummifedern 55 eingreifenden Vorsprüngen 57 versehen, so dass die Gummifedern 55 auch den Anker 16 in der vorschriftsmässigen Lage gegenüber dem Spulenkörper 15 halten. Die Steifigkeit der Gummifedern 55 ist so gewählt, dass diese durch Trägheitskräfte nicht weiter zusammengedrückt werden, welche der Halteteil 50 und der Anker 16 beim Abbremsen am Ende des Rückhubes auf die Gummifedern 50 ausüben.

Bei der abgewandelten Ausführung nach Fig. 4 ist der Anker 16 an einem Halteteil 58 befestigt, an welches zentral ein als Handelsteil beziehbarer Gewindebolzen 59 angeschweisst ist. Dieser durchsetzt eine glatte Bohrung in einer Deckelplatte 60 und trägt aussen eine Spannmutter 61, welche an der Deckelplatte 60 anliegt. Der Halteteil 58 hat eine abgebogene Zunge 62, die zum Zweck der Lagesicherung in einen Durchbruch 63 in der Deckelplatte 60 eingreift. Der Halteteil 58 ist hier gegen Schraubenfedern 64 gespannt, die sich in Einfräsungen 65 in der Deckelplatte 58 zentriert an dieser abstützen.

Der Zusammenbau des Förderers geht so vor sich, dass zunächst der mit dem Spulenkörper 15 versehene Massekörper 26 fest in der durch die Zentrieraugen 28 vorgegebenen Stellung an die Tragschiene 18 angeschraubt wird. Danach werden die Zuganker 32 in den Massekörper 26 eingeschraubt und anschliessend die Klemmstücke 30, 31, die Blattfedern 11 und die Massekörper 22 in der richtigen Reihenfolge auf die Zuganker 32 aufgesteckt. Anschliessend werden die Spannmuttern 32 angezogen und danach die Massekörper 22 an der Tragschiene 18 festgeschraubt. Nach dem Sichern der angezogenen Spannmuttern 33 und gegebenenfalls der Schrauben 23, sowie dem Befestigen des Massekörpers 27, ist der Basiskörper 12 fertig montiert mit den Blattfedern 11 verbunden.

Als nächstes werden die den oberen Endabschnitten der Blattfedern 11 zugeordneten Klemmstücke 30, 31 und die Distanzstücke 43 gefügt auf die Zuganker 42 aufgesetzt und danach die Hutmuttern 44 lose angezogen. Anschliessend wird die Förderrinne 10 auf diese Teile axial aufgeschoben, bis die Gewindebohrung für die Zentrierschraube 49 mit der Zentrierbohrung in dem einen Distanzstück 43 fluchtet. Nach dem Einsetzen der Zentrierschraube 49 werden die Hutmuttern 44 festgezogen, wobei die Klemmverbindung zwischen den Blattfedern 11 und der Förderrinne zustandekommt, und danach die Hutmuttern 44 gegen ungewolltes Lösen gesichert.

Zum Schluss wird die aus der Deckelplatte 53 bzw. 60 und den daran befestigten Teilen bestehende, vorgefertigte Baugruppe an die Förderrinne 10 seitlich angeschraubt, wobei sich ein magnetischer Luftspalt ergibt, der von einem vorgegebenen Nennwert infolge der unvermeidbaren Fertigungstoleranzen mehr oder weniger stark abweicht. Der Luftspalt wird bei Inbetriebnahme des Förderers durch Drehen der Kopfschraube 52 bzw. der Gewindemutter 61 der Beschaffenheit des Fördergutes, der Fördermenge und weiterer, den Fördervorgang beeinflussender Parameter auf den jeweils optimalen Wert eingestellt. Auf eine zusätzliche Sicherung der Teile 52 bzw. 61 gegen ungewolltes Lösen kann wegen der elastischen Verspannung durch die Federelemente 55 bzw. 64 gegebenenfalls verzichtet werden.

Die beschriebene Anordnung zeichnet sich durch eine sehr biegesteife Ausführung der Förderrinne 10, aus, die zudem die Blattfedern 11, den Magnetantrieb 14 und Teile des Basiskörpers 12 nach aussen schützend umgibt und bei welcher ferner der Masseschwerpunkt der Förderrinne näher an dem Masseschwerpunkt des Basiskörpers herangerückt ist als bei den bekannten Ausführungen der gattungsgemässen Art. Die Magnetkraft wird über die Deckelplatte 53 bzw. 60 formschlüssig auf die Förderrinne 10 übertragen, so dass sich der magnetische Luftspalt auch nach längerem Betrieb nicht ungewollt verändern kann.

Durch die Befestigung der Blattfedern am Basiskörper 12 und an der Förderrinne 10 mit Hilfe von Zugankern 32 und 42 werden der Zusammenbau und die Demontage des Förderers wesentlich vereinfacht und erleichtert. Durch die Verwendung gleichgestalteter Massekörper 12, Klemmkörper 30, 31, Distanzstücke 43 und Blattfedern 11, sowie durch die Ausbildung der Förderrinne 10 und der Tragschiene 18 als gezogene Profile, ist ein weitgehend modularer Aufbau erreicht, bei welchem mit einer verhältnismässig geringen Anzahl von Standardbauteilen Förderer mit unterschiedlicher Länge zusammengesetzt werden können. Bei längerern Förderern kann es sich empfehlen, anstelle des Massekörpers 27 einen zweiten Magnetantrieb 14 vorzusehen, der gleich wie der vorhandene Magnetantrieb ausgebildet sein kann und gegebenenfalls nur abgewandelter Mittel zu seiner Befestigung an der Tragschiene 18 bedarf.

**Patentansprüche**

1. Schwingförderer mit einer gestreckten Förderrinne (10) und einem darunter angeordneten massebehafteten Basiskörper (12), der schwingungsisoliert auf einem Support aufstellbar ist und an welchem mindestens zwei in Förderrichtung zueinander versetzte Federn (11) befestigt sind, welche die Förderrinne (10), die mit zwei gegen den Basiskörper gerichteten Seitenwangen (40) versehen ist, freitragend halten und führen, und ferner mit einem Magnetantrieb (14), dessen Spulenkörper (15) am Basiskörper (12) und dessen Anker (16) an der Förderrinne (10) derart befestigt sind, dass die Magnetkraft mindestens annähernd in Förderrichtung auf die Förderrinne einwirkt, dadurch gekennzeichnet, dass die Seitenwangen (40) der Förderrinne (10), den Basiskörper (12) übergreifend, mindestens bis zu dessen waagrechter Schwerpunktsebene (E) heruntergezogen sind und dass der Magnetantrieb (14) unter einem Endabschnitt der Förderrinne (10) angeordnet ist und sein Anker (16) die magnetische Anzugskraft auf eine benachbarte Stirnfläche der Förderrinne (10) überträgt.

2. Förderer nach Anspruch 1, dadurch gekennzeichnet, dass die Förderrinne (10) durch ein der Länge des Förderers entsprechendes Stück eines gezogenen Profils gebildet ist.

3. Förderer nach Anspruch 1 oder 2, dadurch gekennzeichnet, dass der Basiskörper (12) als Grundbauelement eine Tragschiene (18) hat, welche mit Mitteln zum schwingungsisolierten Befestigen bzw. Abstützen an einem Fundament, sowie mit einer mindestens annähernd horizontal ausgerichteten Auflagefläche (19) versehen ist, an welcher einzelne, neben bzw. zwischen den Blattfedern (11) angeordnete und zwischen die Seitenwangen (40) der Förderrinne (10) ragende Massekörper (22, 26, 27) befestigt sind.

4. Förderer nach Anspruch 3, dadurch gekennzeichnet, dass die Tragschiene (18) durch ein der Länge des Förderers entsprechendes Stück eines gezogenen Profils gebildet ist.

5. Förderer nach Anspruch 3 oder 4, dadurch gekennzeichnet, dass die den Blattfedern (11) zugekehrten Stirnflächen der Massekörper (22, 26, 27) mindestens annähernd die gleiche Neigung wie die benachbarten Blattfedern (11) haben.

6. Förderer nach einem der vorhergehenden Ansprüche, dadurch gekennzeichnet, dass der Magnetantrieb (14) in an sich bekannter Weise einen U-förmigen Kern und demzufolge einen im Querschnitt rechteckigen Spulenkörper (15) hat, der hochgestellt zwischen den Seitenwangen (40) der Förderrinne (10) angeordnet ist.

7. Förderer nach einem der Ansprüche 1 bis 6, dadurch gekennzeichnet, dass der Anker (16) des Magnetantriebs (14) an einer Deckelplatte (53 bzw. 60) befestigt ist, welche am Boden (36) und an den Seitenwangen (40) des Förderers (10) stirnseitig anliegt.

8. Förderer nach Anspruch 7, dadurch gekennzeichnet, dass der Anker (16) durch ein zentral angeordnetes Schraubteil (52 bzw. 61) gegen mindestens ein an der Deckelplatte (53 bzw. 60) sich abstützendes, federnd zusammendrückbares Widerlager (55 bzw. 64) gespannt ist.

9. Förderer nach Anspruch 8, dadurch gekennzeichnet, dass am Anker (16) bzw. einem Fassungsteil (58) für den Anker (16) ein Gewindestift (59) befestigt ist, welcher die Deckelplatte (60) in einer gewindelosen Bohrung durchsetzt und aussen eine gegen die Deckelplatte (60) gespannte Gewindemutter (61) trägt.

10. Förderer nach Anspruch 8 oder 9, mit einem Magnetantrieb, der einen U-förmigen Kern hat, dadurch gekennzeichnet, dass mindestens zwei Widerlager (55 bzw. 64) den Anker (16) in der vorgeschriebenen Lage gegenüber dem Spulenkörper (15) halten.

11. Förderer nach einem der vorhergehenden Ansprüche, dadurch gekennzeichnet, dass der Basiskörper (12) als Grundbauelement eine Tragschiene (18) hat, an welcher mehrere, in Förderrichtung zueinander versetzte Massekörper (22, 26) und mehrere Blattfedern (11) befestigt sind, welche die Förderrinne (10) freitragend halten und führen, und dass die der Tragschiene (18) zugeordneten Enden der Blattfedern (11) gegebenenfalls unter Zwischenlage von Klemmstücken (30, 31) mit den Massekörpern (22, 26) in Längsrichtung der Förderrinne zusammengespannt sind und die Massekörper (22, 26) durch Schraubverbindungen (23, 25) mit Einstellspiel in Längsrichtung der Förderrinne an der Tragschiene (18) befestigt sind.

12. Förderer nach Anspruch 11, dadurch gekennzeichnet, dass zum axialen Zusammenspannen der Massekörper (22, 26) mit den Blattfedern (11) und Klemmstücken (30, 31) zwei parallel zur Tragschiene (18) sich erstreckende und die Teile (11, 22, 30, 31) in Bohrungen axial durchsetzende Zuganker (32) vorgesehen sind.

13. Förderer nach Anspruch 11 oder 12, dadurch gekennzeichnet, dass die Tragschiene (18) durch ein der Länge des Förderers entsprechendes Stück eines gezogenen Profils gebildet und mit zwei gegeneinander gerichteten Kopfleisten (19) versehen ist, die als Auflage für die Massekörper (22, 26) und auf der anderen Seite als Gegenlager für Spannmuttern (25) von Befestigungsschrauben (23) für die Massekörper (22, 26) dienen, welche durch einen zwischen den Kopfleisten (19) gebildeten Längsschlitz (20) hindurchtreten.

14. Förderer nach einem der Ansprüche 11 bis 13, dadurch gekennzeichnet, dass der Spulenkörper (15) des Magnetantriebs (14) an einem Massekörper (26) befestigt ist.

15. Förderer nach Anspruch 14, dadurch gekennzeichnet, dass der den Spulenkörper (15) tragende Massekörper (26) mit mindestens einem Zentrieransatz (28) versehen ist, der in eine Zentrierbohrung in der Tragschiene (18) passend eingreift.

16. Förderer nach einem der Ansprüche 11 bis 15, dadurch gekennzeichnet, dass die der Förderrinne (10) zugeordneten Enden der Blattfedern (11) unter Zwischenlage von Distanzstücken (43) und Klemmstücken (30, 31) axial zusammengespannt und an den Stützschultern (36, 45) der Förderrinne (10) festgeklemmt sind.

17. Förderer nach Anspruch 16, dadurch gekennzeichnet, dass zum axialen Zusammenspannen der Blattfedern (11) mit den Distanzstücken (43) und Klemmstücken (30, 31) zwei parallel zur Förderrinne (10) sich erstreckende Zuganker (42) vorgesehen sind.

18. Förderer nach Anspruch 17, dadurch gekennzeichnet, dass die Klemmstücke (30, 31) mit entsprechend der Winkelstellung der Blattfedern (11) angeschrägten Klemmflächen versehen sind und dass die beim Zusammenspannen der Teile an den Klemmstücken (30, 31) auftretenden vertikalen Auslenkkräfte die Blattfedern (11) an der Förderrinne (10) festklemmen.

19. Förderer nach Anspruch 18, dadurch gekennzeichnet, dass die Distanzstücke (43) verschiebbar, jedoch unverdrehbar zwischen die Stützschultern (36, 45) und seitliche Führungsschultern (40) der Förderrinne (10) eingepasst sind und dass die einen Klemmstücke (30) durch die vertikalen Auslenkkräfte gegen die eine Stützschulter (36) angepresst sind.

20. Förderer nach einem der Ansprüche 16 bis 19, dadurch gekennzeichnet, dass am Boden (36) der Förderrinne (10) eine Gewindebohrung vorgesehen ist, in welche eine Zentrierschraube (49) eingedreht ist, die passend in eine Zentrierbohrung in einem der Distanzstücke (43) greift.

**Claims**

1. Vibrating conveyor having an elongate conveyor trough (10) and a base body (12), which has mass and is disposed thereunder and which can be set up on a support so as to be isolated from vibration and to which at least two springs (11) which are displaced relative to one another in the conveying direction are secured, which springs hold and guide in a freely supporting manner the conveyor trough (10), which is provided with two side walls (40) directed towards the base body, and further having a magnetic drive (14), the coil former (15) of which is secured to the base body (12) and the armature (16) of which is secured to the conveyor trough (10) in such manner that the magnetic force acts at least approximately in the conveying direction on the conveyor trough, characterized in that the side walls (40) of the conveyor trough (10), engaging over the base body (12), are drawn down at least as far as the horizontal centre-of-gravity plane (E) of the latter, and in that the magnetic drive (14) is disposed below an end section of the conveyor trough (10) and its armature (16) transmits the magnetic attraction force to an adjacent end surface of the conveyor trough (10).

2. Conveyor according to Claim 1, characterized in that the conveyor trough (10) is formed by a part of a drawn profile section, which part corresponds to the length of the conveyor.

3. Conveyor according to Claim 1 or 2, characterized in that the base body (12) has as a foundation element a carrier rail (18), which is provided with means for vibration-isolated securing to or supporting on a bed, as well as with an at least approximately horizontally oriented bearing surface (19), to which individual mass bodies (22, 26, 27), which are disposed alongside or between the leaf springs (11) and which project between the side walls (40) of the conveyor trough (10), are secured.

4. Conveyor according to Claim 3, characterized in that the carrier rail (18) is formed by a part of a drawn profile section, which part corresponds to the length of the conveyor.

5. Conveyor according to Claim 3 or 4, characterized in that the end surfaces, facing the leaf springs (11), of the mass bodies (22, 26, 27) have at least approximately the same inclination as the adjacent leaf springs (11).

6. Conveyor according to one of the preceding claims, characterized in that the magnetic drive (14) has, in a manner known per se, a U-shaped core and consequently a coil former (15), which is rectangular in cross-section and which is disposed so as to be elevated between the side walls (40) of the conveyor trough (10).

7. Conveyor according to one of Claims 1 to 6, characterized in that the armature (16) of the magnetic drive (14) is secured to a cover plate (53 or 60), which abuts by the end surface against the floor (36) and against the side walls (40) of the conveyor (10).

8. Conveyor according to Claim 7, characterized in that the armature (16) is stressed by a centrally disposed screw part (52 or 61) against at least one resiliently compressible counter-bearing (55 or 64) which is supported at the cover plate (53 or 60).

9. Conveyor according to Claim 8, characterized in that to the armature (16) or a mounting part (58) for the armature (16) there is secured a threaded rod (59), which passes through the cover plate (60) in a threadless bore and carries on the outside a thredeted nut (61) stressed against the cover plate (60).

10. Conveyor according to Claim 8 or 9, having a magnetic drive which has a U-shaped core, characterized in that at least two counter-bearings (55 or 64) hold the armature (16) in the prescribed position relative to the coil former (15).

11. Conveyor according to one of the preceding claims, characterized in that the base body (12) has as a foundation element a carrier rail (18), to which a plurality of mass bodies (22, 26) displaced relative to one another in the conveying direction and a plurality of leaf springs (11) are secured, which springs hold and guide the conveyor trough (10) in a freely supporting manner, and in that the ends, allocated to the carrier rail (18), of the leaf springs (11), possibly with interposition of clamping pieces (30, 31), are stressed together with the mass bodies (22, 26) in the longitudinal direction of the conveyor trough, and the mass bodies (22, 26) are secured to the carrier rail (18) by screw connections with adjustment play in the longitudinal direction of the conveyor trough.

12. Conveyor according to Claim 11, characterized in that, for the axial harnessing of the mass bodies (22, 26) with the leaf springs (11) and clamping pieces (30, 31), two draw rods (32) which extend parallel to the carrier rail (18) and which pass axially through the parts (11, 22, 30, 31) in bores are provided.

13. Conveyor according to Claim 11 or 12, characterized in that the carrier rail (18) is formed by a part of a drawn profile section, which part corresponds to the length of the conveyor, and is provided with two oppositely directed headings (19), which serve as bearings for the mass bodies (22, 26) and on the other side as counter-bearings for clamping nuts

(25) of the securing bolts (23) for the mass bodies (22, 26), which pass through a longitudinal slot (20) formed between the headings (19).

14. Conveyor according to one of Claims 11 to 13, characterized in that the coil former (15) of the magnetic drive (14) is secured to a mass body (26).

15. Conveyor according to Claim 14, characterized in that the mass body (26) carrying the coil former (15) is provided with at least one spigot (28) which fittingly engages in a centering bore in the carrier rail (18).

·16. Conveyor according to one of Claims 11 to 15, characterized in that the ends, allocated to the conveyor trough (10), of the leaf springs (11) are axially harnessed with interposition of distance pieces (43) and clamping pieces (30, 31) and are firmly clamped to supporting shoulders (36, 45) of the conveyor trough (10).

17. Conveyor according to Claim 16, characterized in that, for the axial harnessing of the leaf springs (11) with the distance pieces (43) and clamping pieces (30, 31), two draw rods (42) extending parallel to the conveyor trough (10) are provided.

18. Conveyor according to Claim 17, characterized in that the clamping pieces (30, 31) are provided with clamping surfaces which are bevelled in accordance with the angular position of the leaf springs (11), and in that the vertical deflecting forces occurring on harnessing of the parts of the clamping pieces (30, 31) firmly clamp the leaf springs (11) to the conveyor trough (10).

19. Conveyor according to Claim 18, characterized in that the distance pieces (43) are set displaceably, but non-rotatably between the supporting shoulders (36, 45) and lateral guide shoulders (40) of the conveyor trough (10), and in that one set of clamping pieces (30) are pressed by the vertical deflecting forces against one of the supporting shoulders (36).

20. Conveyor according to one of Claims 16 to 19, characterized in that at the floor (36) of the conveyor trough (10) a threaded bore is provided, into which a centering screw (49) is threaded, which centering screw engages fittingly in a centering bore in one of the distance pieces (43).

**Revendications**

1. Convoyeur vibrant comportant un couloir (10), allongé sous lequel se trouve un corps de base (12) ayant une certaine masse, et qui est susceptible d'être placé de manière isolée contre les vibrations sur un support, et sur lequel sont fixés au moins deux ressorts (11) décalés dans la direction du transport, et qui portent et guident librement le couloir (10) muni de deux parois latérales (40) dirigées vers le corps de base, ainsi qu'un moyen d'entraînement magnétique (14) dont le corps de bobine (15) est fixé au corps de base (12) et dont l'induit (16) est fixé au couloir (10) de façon que la force magnétique agisse au moins approximativement dans la direction de transfert sur le couloir, convoyeur caractérisé en ce que les parois latérales (40) du couloir (10) débordent par rapport au corps de base (12) au moins jusqu'à son plan horizontal (E) passant par le centre de gravité et en ce que le moyen d'entraînement magnétique (14) est placé sous un segment d'extrémité du couloir (10) et son induit (16) transmet la force d'attraction magnétique à une surface frontale voisine du couloir (10).

2. Convoyeur selon la revendication 1, caractérisé en ce que le couloir (10) est formé par une pièce d'un profile étiré dont la longueur correspond à celle du convoyeur.

3. Convoyeur selon la revendication 1 ou 2, caractérisé en ce que le corps de base (12) comporte comme constituant de base un rail de support (18) qui est muni de moyens pour la fixation ou l'appui isolé vis-à-vis des oscillations sur une fondation ainsi qu'une surface d'appui (19) au moins pratiquement horizontale, et sur laquelle sont fixés des corps de masse (22, 26, 27) séparés, prévus à côté ou entre les ressorts-lames (11) et venant en saillie entre les parois latérales (40) du couloir (10).

4. Convoyeur selon la revendication 3, caractérisé en ce que le rail de support (18) est formé par une pièce d'un profilé étiré correspondant sensiblement à la longueur du convoyeur.

5. Convoyeur selon les revendications 3 ou 4, caractérisé en ce que les surfaces frontales des corps de masse (22, 26, 27) tournées vers les ressorts-lames (11) ont au moins pratiquement la même inclinaison que les ressorts-lames (11) voisins.

6. Convoyeur selon l'une quelconque des revendications précédentes, caractérisé en ce que le moyen d'entraînement magnétique (14) comporte un noyau en forme de U, connu en soi et ainsi un corps de bobine (15) de section rectangulaire qui est disposé debout entre les parois latérales (40) du couloir (10).

7. Convoyeur selon l'une des revendications 1 à 6, caractérisé en ce que l'induit (16) du moyen d'entraînement magnétique (14) est fixé à une plaque de recouvrement (53, 60) s'appliquant frontalement contre le fond (36) et les parois latérales (40) du convoyeur (10).

8. Convoyeur selon la revendication 7, caractérisé en ce que l'induit (16) est serré par une partie vissée (52, 61), centrale contre au moins un appui (55 ou 64) susceptible de se comprimer élastiquement et qui s'appuie contre la plaque de recouvrement (53 ou 60).

9. Convoyeur selon la revendication 8, caractérisé en ce qu'une tige filetée (59) est fixée sur l'induit (16) ou une partie de garniture (58) de l'induit (16) et qui traverse la plaque de recouvrement (60) à travers un perçage non fileté et qui porte extérieurement un écrou (61) serré contre la plaque de recouvrement (60).

10. Convoyeur selon la revendication 8 ou 9 comportant un moyen d'entraînement magnétique muni d'un noyau en forme de U, caractérisé en ce qu'au moins deux appuis (55, 64) maintiennent l'induit (16) dans la position prescrite par rapport au corps de bobine (15).

11. Convoyeur selon l'une quelconque des revendications récédentes, caractérisé en ce que le corps de base (12) comporte comme élément principal un rail de support (18) sur lequel sont fixés plusieurs corps de masse (22, 26) décalés dans la direction de transport et plusieurs ressorts-lames (11), ces ressorts portant et guidant librement le couloir (10) et en ce que les extrémités des ressorts-lames (11) associées au rail de support (18) sont serrées dans la direction longitudinale du couloir le cas échéant avec interposition de mâchoires de serrage (30, 31) sur les corps de masse (22, 26) et les corps de masse (22, 26) sont fixés au rail de support (18) par des moyens de liaison vissés (23, 25) avec un jeu réglable dans la direction longitudinale du couloir.

12. Convoyeur selon la revendication 11, caractérisé en ce que pour le serrage axial des corps de masse (22, 26) avec les ressorts-lames (11) et les mâchoires de serrage (30, 31), il comporte deux tirants (32) parallèles au rail de support (18) et traversant axialement des perçages dans les pièces (11, 22, 30, 31).

13. Convoyeur selon les revendications 11 ou 12, caractérisé en ce que le rail de support (18) est formé par un morceau d'un profilé étiré correspondant à la longueur du convoyeur et muni de deux longerons supérieurs (19) dirigés l'un contre l'autre, ces derniers servant d'appui pour les corps de masse (22, 26) et leur autre face servant de contre-appui pour des écrous de serrage (25) de vis de fixation (23) pour les corps de masse (22, 26) qui passent dans une fente longitudinale (22) formée entre les longerons supérieurs (19).

14. Convoyeur selon l'une des revendications 11 à 13, caractérisé en ce que le corps d'induit (15) du moyen d'entraînement magnétique (14) est fixé à un corps de masse (26).

15. Convoyeur selon la revendication 14, caractérisé en ce que le corps de masse (26) portant le corps de bobine (15) est muni d'au moins un épaulement de centrage (28) qui vient de manière adaptée dans un perçage de centrage du rail de support (18).

16. Convoyeur selon l'une des revendications 11 à 15, caractérisé en ce que les extrémités des ressorts-lames associées au couloir (10) sont réunies axialement avec interposition de pièces d'écartement (43) et de pièces de serrage (30, 31) et sont pincées solidement sur les épaulements d'appui (36, 45) du couloir (10).

17. Convoyeur selon la revendication 16, caractérisé par deux tirants (42) parallèles au couloir (10) pour serrer axialement les ressorts-lames (11) avec les pièces d'écartement (43) et les mâchoires de serrage (30, 31).

18. Convoyeur selon la revendication 17, caractérisé en ce que les mâchoires de serrage (30, 31) sont munies de surfaces de serrage inclinées suivant la position angulaire des ressorts-lames (11) et en ce que les forces de débattement verticales engendrées lors du serrage des pièces sur les mâchoires de serrage (30, 31) bloquent les ressorts-lames (11) sur le couloir (10).

19. Convoyeur selon la revendication 18, caractérisé en ce que les pièces d'écartement (43) sont adaptées de façon coulissante mais non rotative entre les épaulements d'appui (36, 45) et les épaulements de guidage latéraux (40) du couloir (10) et en ce que certaines des mâchoires de serrage (30) sont pressées contre les épaulements d'appui (36) correspondants par les forces de débattement verticales.

20. Convoyeur selon l'une des revendications 16 à 19, caractérisé en ce qu'au fond (36) du couloir (10), il est prévu un perçage fileté dans lequel est vissé une vis de centrage (49) qui vient prendre de manière adaptée dans un perçage de centrage dans l'une des pièces d'écartement (43).

0 154 032

FIG.1

FIG.2

FIG.4

9

FIG.3